# EUROPEAN PATENT APPLICATION

(11) **EP 4 353 871 A1**
(43) Date of publication of application: **17.04.2024**
(21) Application number: 22201622.2
(22) Date of filing: 14.10.2022
(51) Int. Cl.: C25B 1/00, H02J 1/10, H02J 7/00, H02J 7/34, H02J 15/00

(54) **PLANT NETWORK INCLUDING AN ELECTROLYSIS PLANT AND A POWER SUPPLY SOURCE**

(71) Applicant: Siemens Energy Global GmbH & Co. KG, 81739 München (DE)
(72) Inventor: Runser, Thibaut, 90459 Nürnberg (DE); Bendig, Marvin, 90513 Zirndorf (DE); Schumann, Sven, 81927 München (DE)

(57) **Abstract**

The invention relates to a plant network (100) comprising an electrolysis plant (1, 1A, 1B), a power supply source (3) with a DC voltage output (7) and a central supply line (5), wherein the central supply line (5) is connected to the DC voltage output (7) of the power supply source (3), so that a direct current can be fed into the central supply line (5) and a central DC network designed for a high voltage is provided to which the electrolysis plant (1, 1A, 1B) is connected via the central supply line (5). The power supply source (3) as a power generator comprises a wind turbine (19) to which a rectifier (13A) with a DC voltage output (7) is connected, wherein the DC voltage output (7) is designed for the high voltage, and wherein a controllable energy storage system (17) is connected to the central supply line (5) which is designed in such a way, that a direct current can be fed into the central supply line (5) by means of the energy storage system (17) as required or can be discharged from the central supply line (5) and fed into the energy storage system (17).

In addition, the invention concerns a method for operating a respective plant network (100).

## Description

The invention relates to a plant network comprising an electrolysis plant and a power supply source having a wind turbine as a power generator. The invention further relates to a method for operating such a plant network.

An electrolysis plant is a device that uses electric current to bring about a material conversion (electrolysis). According to the variety of different electrochemical electrolysis processes, there are also a variety of electrolysis plants, such as an electrolysis plant for water electrolysis.

Today, hydrogen is produced from water by means of a proton exchange membrane (PEM) electrolysis, an anion exchange membrane or alkaline electrolysis. The electrolysis plants produce hydrogen and oxygen from the supplied water with the help of electrical energy. This process takes place in an electrolysis stack composed of several electrolysis cells. In the electrolysis stack under a direct voltage (DC voltage), water is introduced as a reactant, whereby after passing through the electrolysis cells two fluid streams, consisting of water and gas bubbles (O₂ or H₂) escape.

Current considerations are to generate recyclable materials with surplus energy from renewable energy sources in times with a lot of sun and a lot of wind, i.e. with above-average solar power or wind power generation. A valuable material can be in particular hydrogen, which is produced by water electrolysis plants. On the basis of hydrogen, for example, so-called renewable energy gas - also known as renewable energy gas (RE-Gas) - can be produced. A RE-Gas is a combustible gas that is obtained from renewable sources with the help of electrical energy.

Hydrogen is a particularly environmentally friendly and sustainable energy carrier. It has the unique potential to realize energy systems, transport and large parts of chemistry without CO₂ emissions. For this to succeed, however, the hydrogen must not come from fossil sources, but must be produced with the help of renewable energy. In the meantime, at least a growing proportion of the electricity generated from renewable sources is being fed into the public power grid. Thus, according to the electricity mix, a corresponding proportion of green hydrogen can be produced when an electrolysis plant is operated with electricity from the public grid.

In the case of industrial-scale electrolysis, the direct current is mainly provided by grid-controlled rectifiers. This rectification of an AC voltage on the grid side can cause harmonics due to the functioning of the rectifiers, which can load the changeover power grid and/or the DC grid.

In the publication EP 3 723 254 A1 such an electrolysis plant is disclosed, which is connected to the public power grid and is accordingly equipped with mains electricity. For this purpose, the electrolysis plant has a circuit arrangement comprising four coil assemblies and four rectifiers. The first coils of the coil arrangements are each connected to the DC voltage side of one of the rectifiers. The circuit arrangement also comprises two transformers, each of which has a primary winding and two secondary windings. The primary windings of the transformers are connected to the power grid, e.g. a medium-voltage grid or a high-voltage grid. In this way, despite the reduced iron content within the first coil, a desired smoothing of the direct current, or the damping of the harmonics can take place.

A source of renewable energies results from the increasing use of wind power. Especially with coastal, so-called offshore wind energy locations, large electrical outputs can be realized. What is challenging, however, is that a great distance to consumers has to be overcome. The energy should therefore be transported to the consumer as loss-free as possible. Hydrogen is very suitable as a transport medium and energy carrier. This can be used, for example, by pipelines in gaseous form. A positive side aspect here is that a hydrogen-carrying pipeline can simultaneously fulfil the function of an energy storage system, as the internal pressure can be varied within certain limits.

Based on these considerations, it is of particular economic interest to produce the hydrogen directly at the place of energy production, i.e. self-sufficient and independent of the public grid. To this end, it is proposed to install the electrolysis plants on offshore platforms in the maritime sector directly at offshore wind turbines or in their immediate vicinity and to supply them electrically with the electricity generated.

For the mainland, too, such concepts have been proposed to use the electricity from onshore wind turbines or photovoltaic systems, at least in part, directly for hydrogen production through a direct connection to an electrolysis plant. In all these applications, the electrolysis plant is part of a so-called stand-alone grid or stand-alone mode sytem. The electrolysis current is therefore not obtained from the public grid, but is supplied directly from a wind turbine or a PV system and fed into an electrolyser of the electrolysis plant. In contrast to the grid-controlled operation described above, a stand-alone operation brings with it very special challenges and problems with regard to the electrotechnical connection and interconnection of the electrolysis plant with the respective renewable energy generation plant, be it a wind turbine or a photovoltaic system, in particular a safe and above all trouble-free operation of the electrolysis plant in a direct plant with the RES generation plant.

One object of the invention is specifying a plant network in which a reliable operation for an electrolysis system is achievable when connected to a wind turbine as a power supply source, wherein a high availability and operating flexibility shall be achieved, in particular with regard to part load capability of the electrolysis system. Another object of the invention is to specify a method for the operation of such a plant network.

The object directed to a plant network is achieved according to the invention by a plant network comprising an electrolysis system, a power supply source with a DC voltage output and a central supply line, wherein the central supply line is connected to the DC voltage output of the power supply source, so that a direct current can be fed into the central supply line and a central DC network designed for a high voltage is provided, to which the electrolysis plant is connected via the central supply line, wherein the power supply source as a power generator has a wind turbine to which a rectifier with a DC voltage output is connected, wherein the DC voltage output is designed for the high voltage, and wherein a controllable energy storage system is connected to the central supply line, which is designed in such a way that in the central supply line by means of the energy storage system, a direct current can be fed in as required or can be discharged from the central supply line and fed into the energy storage system.

The term high voltage for the DC voltage level of the central supply line at the DC voltage output is not to be understood in a limiting manner but rather in functional manner. The scope of terminology will be explained below.

The invention is already based on the finding that operation at low partial load, volatile energy input and repeated shutdowns of the electrolyser in an electrolysis plant, have all a negative influence on its efficiency and lifetime as well as on the purity of the hydrogen. However, these conditions are often met when the energy source supplying the electrolyser is a renewable energy source such as a wind turbine, due to its high volatility.

Currently, the electrolysis plants are connected directly to renewable energy sources as well as to the grid in order to smooth out the renewable energy power production and avoid the problems mentioned above. This is not possible though when the system operates in island mode without grid connection. It is a particular challenge in case an island mode shall be realized in a plant network.

The invention advantageously combines in a plant network the concept of a central DC-network available on the central supply line with a controllable energy storage system that is connected to the central DC supply line. The invention therefore turns away from any storage device that might be directly connected to renewable energy sources, like a wind turbine, as well as directly to the public grid with a lot of disadvantages. Those concepts have been suggested in the art before to directly connect a battery to the rectifier output of a wind turbine. This direct connection results in complex integration as the voltage level on the battery needs to follow the rectifier output voltage level in operation.

With this plant network according to the invention, however, it is possible to smooth out the renewable energy power production from the wind turbine very efficiently and to avoid the problems mentioned above, wherein a controllable energy storage system is connected to the central supply line, which is designed in such a way that in the central supply line by means of the energy storage system, a direct current can be discharged from the energy storage system and feed in the central supply line, as required, or the energy storage system can be charged by feeding it with electrical energy from the central supply line.

The controllable energy storage system is therefore integrated in the DC bus of a wind-powered electrolyser system and is capable to offers application of three different DC voltage levels in the plant network independently and decoupled, which offers a high operation flexibility and smooth and efficient operation and control of the energy storage. The DC voltage level supplied to the electrolyser system could vary depending on the load or hydrogen production. The DC voltage level closer to the generator would also vary depending on the energy production or wind availability. The last one is the voltage on the energy storage system that could vary depending on the battery state. This allows the connection of an energy storage unit to ensure better operation of the electrolysers of the electrolyser system by reducing the power fluctuations and the number of shutdowns. This also allows to use generator-side rectifier systems whose design is close or equal to that of today's wind turbines. A particular advantage is the high availability and operating flexibility that can be achieved with regard to low part load capability of the electrolysis system.

Particular advantages to be pointed out are that fluctuations in wind energy generation imparted while charging and discharging of the energy storage system is smoothed and the operation of the electrolysis plant is stabilized also in low part-load conditions.

Furthermore, in order to solve the connection and transmission problem in a plant network with an electrolysis system as cost-effectively and efficiently as possible, the invention proposes the connection of the electrolysis plants via a specially equipped and central DC network. This DC grid provides the specified high voltage and electrical power on the central supply line and acts as a transmission and distribution network for the direct current. Via the central DC grid, the required transmission power is brought from the power supply source to the electrolysis plant so that the electrolysis current is available. The high voltage of DC network can be flexibly selected and adjusted to a required DC connection value.

In the plant network, the power supply source as a power generator comprises a wind turbine to which rectifier with a DC voltage output is connected, wherein the DC voltage output is designed for the high voltage. In this way, a connection or direct current connection and supply of the electrolysis plant by a wind turbine is achieved in the plant network via the central DC supply line, wherein a stand-alone grid operation is advantageously possible in an island mode. If the plant network is operated in a stand-alone grid, there is no connection to the public power grid. Thus, the grid frequency of the public power grid from 50 Hz to 60 Hz is irrelevant for the design and operation of the electrical components in the frequency-independent DC grid. Furthermore, there are no costs for components and conversion losses, such as transformers, or for the necessary realignment, transmission or rectification. This results in a more favorable cost position, while at the same time flexibility in the design and selection of the connection components in the DC network. A mains frequency-independent operation is achieved with the central supply line designed as a DC bus.

The terminology high voltage for the DC voltage level of the central supply line at the DC voltage output is not to be understood in a limiting manner. For example, preferably, when being used, the specified high voltage on the central supply line is provided with a DC voltage output with an DC output voltage above 1.5 kV, in particular above 10 kV. However, a minimum voltage level of the DC high voltage above the required electrolyser operating voltage is needed. In general, the DC voltage output is designed for the high voltage of the central supply line and outputs the specified high voltage at a corresponding voltage level as desired, i.e. optionally medium voltage levels of 3 kV, 6 kV, 10 kV, 15 kV, 20 kV, 30 kV, or high voltage of 60 kV or 110 kV. The voltage level can be flexibly adapted and changed according to the specific application and requirements of the plant network.

The concept with the central DC supply line is easily scalable with the connected energy storage system and very flexible with regard to the number of electrolysis plants supplied via the DC grid and the type of power supply source. The DC grid on the central supply line also creates a decoupling or independence with regard to the possible types of generation of the electrical power fed into the central supply line. For example, the plant network can in principle be designed for stand-alone grid operation - island mode only - or a connection to a public network is possible. Advantageous combinations are also possible and a purchase from different power supply sources, such as wind energy, photovoltaics or hydro-power.

In an advantageous embodiment of the plant network the energy storage system comprises a storage unit and a bidirectional DC-DC converter that is connected to the storage unit, whose DC voltage output is designed for the high voltage.

This design of the energy storage system results in considerable advantages both for a reliable and smooth discharge from the storage unit as well as for the storage of electrical energy in the storage unit. Thanks to the DC-DC converter, the voltage level for discharge and storage can be flexibly adjusted. The storage voltage can thus be selected individually and independently compared to the high voltage that is applied on the central supply line, depending on the required DC voltage. This decoupling via the DC-DC converter thus favors stable discharge and charging of the storage, i.e. an adjustable charging and a suitable charging voltage on the input side of the DC-DC converter.

In another advantageous embodiment of the plant network the storage unit comprises an electrical storage battery, which is connected to the input of the bidirectional DC-DC converter.

A battery electric storage system (BESS) that is connected to the central supply line via the DC-DC converter is a preferred solution, as charging and discharging of electrical batteries can be done in a reliable and controlled manner. Furthermore, battery-based storage unit, like Lithium-Ion based batteries, are reliable, commercially available in large scale units. In addition, they allow many charging and discharging cycles and also fast and high-performance discharging, in case needed.

Nickel cadium based batteries could also be used instead as a battery electric storage, but NiCd cells come with a lower specific energy, what takes more volume for the installation close to the wind turbine or integrated into the wind turbine

Alternatively, or in combination with a BESS-systems a fuel cell with a hydrogen gas storage could be used advantageously as well, in particular as hydrogen as the product from the electrolyser is already available in the plant network.

In a further advantageous embodiment of the plant network a control device is provided, with which the energy storage system is controllable for storing and discharging electrical energy.

The control device takes into account, as an input variable, in particular, the current or predicted feed-in power of the wind turbine, the current or forecasted power requirement of the electrolysis plant and the current state of charge of the energy storage system. Thus, as required, the energy storage system can be charged or discharged by controlling the bidirectional DC-DC converter accordingly with a control signal. A particular advantage results from the effect that the existing different DC voltage levels can be controlled, adjusted individually and monitored by the control device and the connected power electronics that is available to adapt accordingly the respective DC voltage.

In another advantageous embodiment of the plant network the electrolysis plant is connected via a connection line to the central supply line, wherein in the connection line a DC-DC converter is installed, whose input voltage corresponds to the high voltage in the central supply line and whose output voltage to an operating voltage of the electrolysis plant.

With this design, the DC voltage level and thus the electrolysis power supplied though a connection line to operate a connected electrolysis system can be individually adjusted and can be provided accordingly at the output of the DC-DC converter or "DC-chopper". This individual adaption can be achieved in a controlled manner via the control device, as the DC-DC converter is preferably controllable.

Furthermore, in another advantageous embodiment of the plant network, the DC-DC converter is designed as an adjustable step-down converter, so that the supply of the electrolysis plant with electrolysis current received from a fluctuating feed-in power of the power supply source in the central supply line is adaptable and adjustable.

With the controllability of the step-down converter, a flexible supply of the electrolysis plant with direct current for electrolysis via a connection line is possible and adaptions in terms of electrolysis performance can be achieved. Whether there is a continuous or a gaping operation of the step-down converter depends on the inductance, switching frequency, input voltage, output voltage and the provided output current. Since these parameters can change rapidly in some circumstances, the transition between the two operating modes must generally be taken into account when designing the circuitry, in particular the design of the controller in the DC-DC converter. The two operating modes differ with regard to the control characteristic, i.e. the dependence of the output voltage on pulse duty factor, as well as with regard to the disturbances from radiation.

In a particular advantageous embodiment of the plant network the DC-DC converter is designed as a controllable step-down converter equipped with a regulation of the output voltage via the method of pulse width modulation in non-gap operation. In this way, a continuous operation of the step-down converter can be achieved and a controllability of the electrolysis current supplied to the electrolysis plant.

In another advantageous embodiment of the plant network the DC-DC converter is formed by an intermediate transformer to which an inverter is connected on the primary side and a rectifier on the secondary side, so that a direct current is suppliable to the electrolysis plant a given operating voltage, wherein an AC intermediate circuit is formed.

The advantage of the AC intermediate circuit here is to isolate the primary and secondary and can reach higher voltage ratio. Also here the AC frequency of this intermediate circuit can be higher than the grid frequency and reach even kHz. This can considerably reduce the size of passive component (transformer, capacitor, inductors).

With this very favorable design of the DC-DC converter in the plant network an AC intermediate circuit is provided to connect the electrolysis plant to the central supply line.

In the DC-DC converter the inverter converts the DC voltage from the external DC power source into an AC voltage that couples to the intermediate transformer on the primary side. On the secondary side of the intermediate transformer, a rectifier is connected, which ensures the reconversion into a DC voltage, at a desired and predetermined voltage or current level for electrolysis. The DC-DC converter is therefore particularly advantageously designed with an AC intermediate circuit and designed for the provision of direct current by an external direct current source to supply the electrolyser of the electrolysis plant with electrolysis current. This is achieved by direct coupling or direct connection of the input to an external DC power source. As an external direct current source, preferably a wind turbine plant or a photovoltaic system can be advantageously connected to the electrolysis plant, each of which can be advantageously designed independent of the grid in a so-called island operation for both offshore and onshore respectively.

The external DC power source can be connected directly via the input of the DC-DC converter with AC intermediate circuit arrangement, so that a DC power supply to the electrolyser is achieved. Due to the galvanic isolation and decoupling via the AC intermediate circuit, this circuit arrangement reliably avoids damaging interference with high-frequency stray currents and thus earth fault currents and unwanted voltage losses in the electrolyser. At the same time, a simple and reliable direct connection of the electrolysis plant to a renewable energy generation plant, preferably a wind turbine, can be achieved and off-grid operation is possible. Due to the AC intermediate circuit, a particularly good and flexible adaptation to a changing voltage or current level on the power generation side is advantageously achievable in addition.

The galvanic isolation by this concept in the DC-DC connection is to be preferred for another reason, in particular in electrolysis plant that comprise alkaline electrolysers, which are operated on the basis of alkaline electrolysis. The galvanic isolation advantageously reduces the earth and stray currents through electrolysis. The reason for this is that the ground loop cannot be closed. Due to the galvanic isolation, the current loop is advantageously separated by the earth.

Preferably, the secondary side of the intermediate transformer in the AC intermediate circuit is not grounded. This design not only provides effective protection against high-frequency signal components on the connection cable from the power source, but also noticeably lowers and suppresses the DC stray currents, as there is then again a closed ground loop provided.

It is possible in the plant network of the invention that as electrical components also several inverter-, transformer- or rectifier-systems can be placed in parallel and/or in series in an Input Series Output Parallel ISOP or Input Parallel Output Parallel IPOP configuration to share the current and build up in voltage.

The voltage on the input side of the DC-DC converter is preferably selected higher than required for electrolysis operation. This reduces the losses or reduces the required cross-section of copper or aluminum cables, which saves costs and overcomes in addition larger line distances - for example - from the tower of a wind turbine around several 100 m high down to the electrolysis plant.

In an advantageous embodiment of the plant network the rectifier is adjustable and / or designed as a three-phase rectifier, in particular as a B6 bridge rectifier.

Preferably, in case no B6 bridge rectifier is applied, the the wind turbine generator needs to be controlled by the rectifier. In this case the rectifier is designed for bidirectional operability, which is not possible with a B6 bridge rectifier. Therefore, preferably active rectifier are being applied with actively controlled switches that run bidirectionally.

A controllability of the rectifier(s), which are advantageously designed as three-phase regulators or as B6 bridge rectifiers, makes it possible to adjust the total current generated by the rectifier(s) and thus, for example, to control the operation of an electrolyser connected to the DC-DC converter, preferably via the control device.

These controllable converters are preferable realized as Voltage Source Converters (VSC) that integrate as well as current loop control.

Advantageously in the plant network the DC-DC converter the alternating current frequency of the AC intermediate circuit is adjustable to a predetermined value.

By equipping the DC-DC converter with an AC intermediate circuit, it does not have to be connected to a public network and one is thus largely free in the choice of the alternating current frequency in the transformer. Advantageously, a high-frequency transformer is provided here, so that deviations from the usual frequencies in the public networks can be made.

In a further advantageous embodiment of the plant network, the DC-DC converter is designed for an alternating current frequency in the AC intermediate circuit that is higher than the usual mains frequencies of 50 - 60 Hz of public electricity grids. It makes sense to use higher frequencies here, as this can reduce the size and weight of the intermediate transformer as well as the use of materials. This aspect is particularly advantageous for a direct connection of the electrolysis plant to a wind turbine. Due to the more compact design and the lower weight at a high operating frequency, the transformer can be accommodated, for example, in the nacelle of the wind turbine or in the bottom of the tower of the wind turbine. The DC-DC converter in a whole can also be arranged there. Thus, the electrolysis plant with the electrolyser can, for example, be installed in the immediate vicinity of the wind turbine, so that short cable paths for the connection are possible.

In a particularly advantageous embodiment, the circuit arrangement is designed for an alternating current frequency of 500 Hz to 50 kHz, in particular from 10 kHz to 30 kHz. This frequency concerns the frequency of the inverter and rectifier connected to the intermediate transformer. In order to exploit the advantages of installation space and cost advantages, a high-frequency transformer is provided as an intermediate transformer.

Furthermore, in an advantageous embodiment of the plant network the wind turbine comprises a generator whose output is connected to the AC voltage input of the rectifier. This means that the rectifier is directly fed by the generator of a wind turbine.

The generator is preferably designed as a three-phase synchronous machine with permanent magnet excitation. It is possible in said design that in the permanent magnet excited synchronous machine (PSM), the rotor carries permanent magnets for excitation. This is becoming more and more important. The hybrid synchronous machine (HSM), on the other hand, combines the effect of electromagnetic reluctance and the effect of permanent magnets to torque formation. The generator is driven by the rotor of the wind turbine and preferably supplies a three-phase current, i.e. a three-phase alternating current, which is converted to a direct current in the connected rectifier and fed into the central supply line at the specified DC high voltage level.

Another object of the invention is to specify a method for the operation of such a plant network. The object directed to a method is achieved according to the invention by a method for operating a plant network in which in a charging phase electrical energy from the central supply line is stored in the energy storage system, and in a discharge phase electrical energy is discharged from the energy storage system and fed into the central supply line.

In an advantageous embodiment of the method the plant network is operated in an off-grid island operation.

This enables self-sufficient and fully off-grid operation, which is particularly suitable for both offshore and onshore applications. In the process, a grid-independent charging and discharging of the energy storage system, in particular the battery, is carried out.

The advantages of described above in detail for the plant network apply similar for the method for the operation of such a plant network.

The properties, features and advantages of the invention described above, as well as the manner in which they are achieved, will be explained in more detail in connection with the figures in the following description of the example and variations thereof. The example and the corresponding variations serve to explain the invention and do not limit the invention to the combinations of features indicated therein, even with respect to functional features. Moreover, any of the features disclosed in the example below may be considered in isolation and suitably combined with the features of any of the above embodiments and their further aspects.

### It is shown in:

- FIG 1: a plant network with electrolysis plant connected to a wind power plant via a central DC power supply line;
- FIG 2: another example of the invention with a plant network where the electrolysis plant is connected to a wind power plant via an AC intermediate circuit;
- FIG 3: another example of the invention showing a plant net-work with a number of electrolysis plants connected to the wind power plant and optionally a public grid supply.

The same reference signs have the same meaning in the figures.

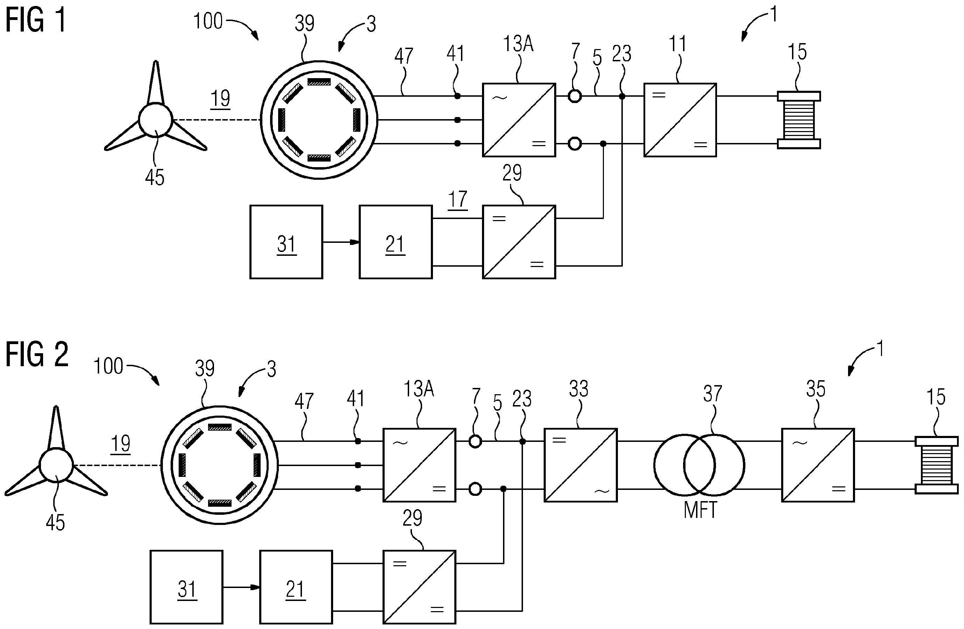

FIG 1 shows in a schematic view of an example of a plant network 100 specifically designed for island mode operation. The plant network 100 comprises an electrolysis plant 1 that has an electrolyser 15, a power supply source 3 with a DC voltage output 7 and a central supply line 5. The central supply line 5 is connected to the DC voltage output 7 of the power supply source 3, so that a direct current can be fed into the central supply line 5 and a central DC network designed for a high voltage is provided to which the electrolysis plant 1 is connected via the central supply line 5. The power supply source 3 comprises as a power generator a wind turbine 19 to which a rectifier 13A with a DC voltage output 7 is connected. The wind turbine 19 has a turbine 45 with a rotor and a generator 39. The generator 39 is designed as a three-phase synchronous machine with permanent magnet excitation. The output of the generator 39 is connected to the AC voltage input 41 of the rectifier 13A via a three-phase current connection 47. The DC voltage output 7 of the rectifier 13A is designed for the high voltage. A controllable energy storage system 17 is connected to the central supply line 5 which is designed in such a way, that a direct current can be fed into the central supply line 5 by means of the energy storage system 17 as required or can be branched off and extracted from the central supply line 5 and fed into the energy storage system 17. The energy storage system 17 comprises a storage unit 21 and a bidirectional DC-DC converter 29, so that electrical current can bidirectionally be passed through the DC-DC converter with respective DC voltage levels, as required. One voltage level is being determined from the charging and discharging conditions and the cycles already undergone of the storage device 21. This first voltage level is mainly depending on the battery state and operational conditions and could therefore vary over the lifetime (battery voltage). Another DC voltage is the DC high voltage that is provided on the central supply line 5 (DC-Bus high voltage). The DC voltage level on the DC-Bus could vary depending on the electricity generation provided from the generator 39 originating from fluctuating energy production of the turbine 45. Finally, another DC voltage is the operational DC voltage to be supplied to the electrolyser 15 of the electrolysis plant 1, that could particularly vary depending on the load of the electrolyser 15 (operating voltage).

The electrolyser 15 of the electrolysis plant 1 is connected via a connection line 9 to the central supply line 5. In the connection line 9 a DC-DC converter 11 ("DC-chopper") is installed, whose input voltage corresponds to the high voltage in the central supply line 5. Consequently, the output voltage of the DC-DC converter corresponds to the operating voltage of the electrolyser 15 in the electrolyser plant 1.

The DC-DC converter 11 is designed as an adjustable step-down converter. Hence, the supply of the electrolysis plant 1 with electrolysis current for operating the electrolyser 15 received from a fluctuating feed-in power of the power supply source 3 in the central supply line 5 is adaptable and adjustable via the DC-DC converter 11. For this to be realized for example, the DC-DC converter 11 is configured as a controllable step-down converter 11 that is equipped with a regulation of the output voltage via the method of pulse width modulation in non-gap operation.

These measures allow an independent and rather decoupled connection and operation of an energy storage unit 21 unit to ensure also better and smooth operation of the electrolyser 15 by reducing the power fluctuations and the number of shutdowns. This also allows to use rectifier 13A on the side of the generator 39 whose design is close or equal to that of today's wind turbines 19, which is cost saving. Connecting the energy storage system 17 to a part of the DC supply system with stable voltage allows for a better power control and coordination of the involved converter units. Power In- and Output can be coordinated by controlling the different DC voltages via the control device 31. This would not be possible if the battery is connected in parallel to a rectifier in a DC system where the DC voltage changes with the energy production. This can be avoided in the present design of the plant network. The additional advantage is the possibility to produce hydrogen fully off-grid. This allows to eliminate the costly electrical connection to the shore and considerably improve the efficiency by reducing the number of conversion step.

In FIG 2 a plant network 100 is illustrated with a further improved operational behaviour. This is an example of the invention with a plant network 100 where the electrolysis plant 1 is connected to a wind power plant 19 via an AC intermediate circuit. To realize an AC intermediate circuit in the connection most efficiently and at reasonable cost, the DC-DC conversion is formed via an intermediate transformer 37 to which an inverter 33 is connected on the primary side. A rectifier 35 is connected on the secondary side of the intermediate transformer, so that a direct current is suppliable to the electrolyser 15 of the electrolysis plant 1 at a given operating voltage. The rectifier 35 is adjustable and designed as a three-phase rectifier, in particular as a B6 bridge rectifier. A favorable galvanic isolation is realized with this configuration of an AC intermediate circuit that enables many advantages.

It is also possible in embodiment of FIG 1 - not shown in detail in FIG 1 - that similarly as in FIG 2 an intermediate transformer 37 is applied and fully incorporated already in the DC-DC converter 11. With this construction a similar galvanic isolation and decoupling is realized as in FIG 2 that reduces stray currents in the plant network 100, that could impair operation of electrolyser 15 and particularly lead to a faster degradation of electrolysis cells. Hence, it is possible that the alternating current frequency of the AC intermediate circuit is adjustable to a predetermined value, what offers further opportunity for cost savings and flexibility in the selection of electrical components. Because of the AC intermediate circuit enabled by the intermediate transformer 37, a DC-DC converter 11 (see FIG 1) that is incorporating already an AC intermediate circuit can be construed for an alternating current frequency in the AC intermediate circuit that is greater than the usual main frequencies of 50 - 60 Hz of public electricity networks.

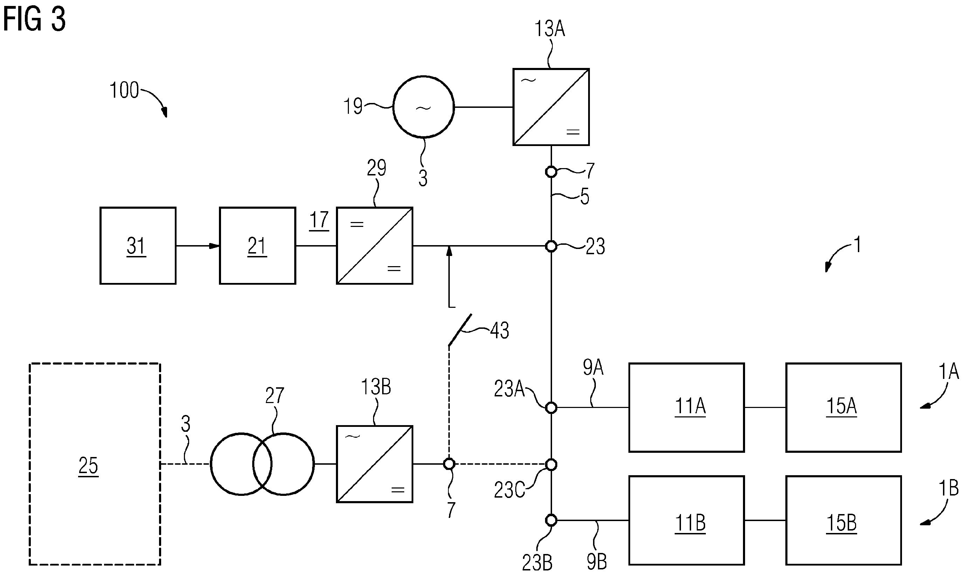

In FIG 3 another example is schematically illustrated showing a plant network 100 with a number of electrolysis plants 1A, 1B are forming an electrolysis system 1 that is connected to a wind power plant 19, and, where a connection to the public electricity grid 25 is available as well in the plant network as an additional electricity supply option.

The plant network 100 comprises an electrolysis system 1 with two electrolysis plants 1A, 1B and a power supply source 3 connected to the electrolysis system 1. The power supply source 3 has as a power generator a wind turbine 19, which serves as a renewable energy plant (RES plant) and source of green electricity. The supply of the electrolysis system 1 with electrolysis current is carried out via a central supply line 5, which is loaded with DC voltage and DC current respectively, thus a central DC BUS line is formed by the central supply line 5, by means of which the electrolysis system 1 can directly be supplied a with direct current for the electrolysis process.

Each of the electrolysis plants 1A, 1B of the electrolysis system 1 is connected via a respective connection line 9A, 9B to a supply connection 23A, 23B to the central supply line 5, so that a parallel connection of the electrolysis systems 1A, 1B is realized. The electrolysis plant 1A has at least one electrolyser 15A and the electrolysis plant 1B at least one electrolyser 15B. The electrolysers 15A, 15B can be optionally designed as a PEM electrolyser, as an AEM electrolyser (AEM: anion exchange membrane) or as an alkaline electrolyser, whereby combinations are also possible. It is possible that a larger number of electrolysers 15A, 15B are connected in a series or in parallel of the respective electrolysis plant 1A, 1B to be supplied via the corresponding connection line 9A, 9B.

On the side of the power supply source 3, the wind turbine 19 is connected via the generator of the wind turbine 19 - not shown in detail - to a rectifier 13A, which has a DC voltage output 7. Thus, an alternating current generated by the generator of the wind turbine 19 can be fed via the rectifier 13A as a direct current at a specified high voltage at the DC voltage output 7 into the central supply line 5. As a result, a central DC network designed for a high DC voltage is realized. In order to couple the electrical power generated by the wind turbine 19 and feed the power into the central supply line 5, no further active components such as additional transformers or the like are required when connecting the wind turbine 19 to the central supply line 5, so that a particularly simple supply topology is realized in the plant network 100.

The DC voltage level at the DC voltage output 7 of the rectifier 13A is flexibly adaptable to the respective requirement in the plant network 100, wherein a high output voltage is selected as the specified high voltage, which is preferably greater than 1.5 kV. Here, for example, in the design of the central DC network through the central supply line 5, the nominal voltages of the grid levels commonly used in the power transmission industry standards can be applied in principle, or these values can serve as an indication of a preferred DC voltage level. Here, electrical energy is transmitted to high-voltage lines in different grid levels of medium voltage and high voltage with the following usual nominal voltages: medium voltage of 3 kV, 6 kV, 10 kV, 15 kV, 20 kV, 30 kV, high voltage of 60 kV, 110 kV. The central supply line 5 acts very advantageously as a central DC BUS line, which directly enables a high-voltage-based direct current supply of an electrolysis system 1 and the connected electrolyser plants 1A, 1B.

For a connection and DC power supply of the electrolysis plants 1A, 1B tuned to the operating voltage, a step-down DC-DC converter 11A is connected to the connection line 9A and a step-down DC-DC converter 11B is connected to the connection line 9B accordingly. The input of the step-down DC-DC converter 11A is connected to the supply connection 23A and analogously the input of the step-down DC-DC converter 11B via the supply connection 23B to the central supply line 5. On the output side, the step-down DC-DC converters 11A, 11B are each connected to a respective electrolyser 15A, 15B in the connection line 9a, 9B, so that for the electrolysis in the electrolysers 15A, 15B a respective direct current is provided at an adjustable voltage level required as the operating voltage. In the operation of the plant network 100, a high-voltage direct current is provided on the central supply line 5 as a central DC network and is used to supply the electrolysis plants 1A, 1B that are connected to the central supply line 5 in a parallel connection with electrolysis current. The plant network 100 can be designed or expanded particularly flexibly, for example by connecting further electrolysis plants 1A, 1B comprising further electrolysers 15A, 15B via a connection line 9A, 9B. Advantageously, with the plant network 100, a grid-independent stand-alone grid operation is possible in an island mode operation.

The step-down DC-DC converters 11A, 11B connected to the connection line 9A, 9B act as DC/DC converters and are each designed in such a way that their input voltage corresponds to the specified high voltage required in the central DC network on the central supply line 5 and whose respective output voltage is adapted or adjusted individually to a respective operating voltage of the electrolysis plant 1A, 1B. The step-down converters 11A, 11B are designed as a controllable step-down converter, so that the supply of the electrolysis system 1A, 1B with electrolysis current to a fluctuating feed-in power of the power supply source 3 in the central supply line 5 can be adapted and tracked. The step-down converters 11A, 11B can be designed, for example, as adjustable step-down converters with a regulation of the output voltage via the method of pulse width modulation in non-gaping operation mode, which enables continuous operation with selected performance. For the control of the active components in the network plant 100 a control device 31 is being integrated.

In the plant network 100 shown in FIG 3, it is also possible that an electrolysis plant 1A, 1B, for example, is arranged at the foot of the tower of a respective wind turbine 19 and is directly connected there to the central supply line 5. This is advantageous, for example, for Onshore applications and installation of wind turbines 19 in remote areas and for stand-alone grid operation in island mode. A wind turbine 19 also means a wind farm or a wind farm - Onshore or offshore, with a variety of wind turbines 19.

As already described in some detail in FIG 1 and FIG 2, for a continuous operation in island mode the plant network 100 of FIG 3 also comprises a controllable energy storage system 17, which includes storage unit and a bidirectional DC-DC converter 29. During operation, the discharging and charging mode of the energy storage system 17 is controlled by the control device 31. In addition to storage control, the control device 31 is designed and equipped with further control functions like the active components in the plant network 100. By virtue of the control device 31, particularly, direct current can be fed into the central supply line 5 by means of the energy storage system 17 as required or can be discharged from the central supply line 5 and fed into the energy storage system. Fluctuations from the wind turbine 19 can sufficiently smoothed out to improve conditions for Hydrogen production and keep operation of the electrolysers 15A, 15B stable. The energy storage system 17 is equipped with batteries with sufficiently high capacity of above about 1,0 MWh, preferably about 5,0 - 25 MWh, for a typical large wind turbine 19 with a rated power of 3 - 5 MW for example. The capacity can be adapted and designed upfront considering in particular the estimated local wind conditions, the rated power of the wind turbine 19, the availability of the wind turbine 19 and the overall harvest factor. It is also possible that - most likely - the battery may also have lower capacities than indicated above, preferably in case it will just deal and compensate with the large power gradients of wind and primarily not store too large amounts of energy in the battery. Therefore, in the energy storage system 17 a fuel cell coupled with a hydrogen storage reservoir can also be used in parallel or alternatively to a battery storage for delivering energy during a longer time, if required. This would be a favorable combined solution for the energy storage system 17 that offers high flexibility.

According to the embodiment of FIG 3, on the side of the power supply source 3 in the plant network 100 a connection to the public electricity grid 25 is possible in addition. For this purpose, as illustrated in FIG 3 in dashed line, a separate supply connection 23C is provided in the central supply line 5. The connection to the public electricity grid 25 is realized via a connection transformer 27 and a downstream rectifier 13B with a DC voltage output 7. The rectifier 13B is designed in such a way that its DC voltage output 7 is designed for the required high voltage of the central supply line 5 and provided the specified high voltage at a corresponding voltage level, i.e. optionally medium voltage level of 3 kV, 6 kV, 10 kV, 15 kV, 20 kV, 30 kV, or high voltage of 60 kV or 110 kV. The voltage level can be flexibly adapted and changed. In addition, bidirectional operation is possible when using the supply connection 23C as a grid connection, so that a demand-driven feed-in of direct current from the public electricity grid 25 into the central supply line 5 as well as a supply of direct current from the DC network of the central supply line 5 is possible. Another interesting and advantageous operation in this embodiment is to use the energy storage system 17 to feed the public electricity grid for a certain time, if needed, for example in case of grid support. A connection to the energy storage system 17 is also shown, that can be activated by a controllable switching device 43, so that a direct current at the DC voltage output 7 of the rectifier 13B can be easily supplied to the bidirectional DC-DC converter 29 at the same voltage level to load the storage device in case needed.

In addition to loading the storage device 21, thus, as required, electricity from the public electricity grid 25 can also be fed directly into the central supply line 5 in a voltage-adapted manner at the supply connection 23C and provided for use for electrolysis purposes in the electrolysis plants 1A, 1B. A particular advantage here is that by providing a connection to the public electricity grid 25, for example, replacement requirements are covered, for example, if the wind turbine 19 does not produce electricity due to maintenance or only to a very limited extent, or in phases of a longer lasting dark doldrums, so that in addition to the storage device another second backup solution is provided in order to ensure the most continuous supply and uniform operation of the electrolysis plants 1A, 1B for hydrogen production. Primarily, however, the energy storage system 21 is being used to smooth fluctuations and shutdowns independent from using the public electricity grid 25, or in solely island mode erections without having the alternative of a supply from the public electricity grid 25.

If necessary, even in the event of an undersupply of electrical DC power on the central supply line 5, one or more electrolysers 15A, 15B can be operated in partial load or taken off the DC grid. An adapted partial load operation is achieved as required in the respective connection line 9A, 9B by the adjustable step-down DC-DC converters 11A, 11B, by means of which the direct current power over which the output voltage at the output of the step-down DC-DC converter 11A, 11B is adjustable in each case. In a pure stand-alone system operation of the plant network 100, a replacement requirement is usually not to be procured due to the lack of an available connection option to a public electricity grid 25. Therefore, the controllable energy storage system 17 is also very advantageous in the installation shown in FIG 3 in order to keep level of hydrogen production high and smooth during short-term fluctuations as well as to bridge longer interruptions.

All examples of a plant network 100 shown above enable during operation of the plant network 100 in a charging phase that electrical energy from the central supply line 5 is stored in the storage unit 21 of the energy storage system 17, and in a discharge phase electrical energy is discharged from the storage unit 21 and fed into the central supply line 5. The plant network 100 is construed to be ready-to use in a fully off-grid island operation. The additional advantage is the possibility to produce hydrogen fully off-grid. This allows to eliminate the costly additional electrical connection to the shore and considerably improve the efficiency by reducing the number of conversion steps.

## Claims

1. A plant network (100) comprising an electrolysis plant (1, 1A, 1B), a power supply source (3) with a DC voltage output (7) and a central supply line (5), wherein the central supply line (5) is connected to the DC voltage output (7) of the power supply source (3), so that a direct current can be fed into the central supply line (5) and a central DC network designed for a high voltage is provided to which the electrolysis plant (1, 1A, 1B) is connected via the central supply line (5), wherein the power supply source (3) as a power generator comprises a wind turbine (19) to which a rectifier (13A) with a DC voltage output (7) is connected, wherein the DC voltage output (7) is designed for the high voltage, and wherein a controllable energy storage system (17) is connected to the central supply line (5) which is designed in such a way, that a direct current can be fed into the central supply line (5) by means of the energy storage system (17) as required or can be discharged from the central supply line (5) and fed into the energy storage system (17).

2. Plant network (100) according to claim 1, wherein the energy storage system (17) has a storage unit (21) and a bidirectional DC-DC converter (29) connected to the storage unit (21), whose DC voltage output (7) is designed for the high voltage.

3. Plant network (100) according to claim 2, in which the storage unit (21) comprises an electrical storage battery, which is connected to the input of the bidirectional DC-DC converter (29).

4. Plant network (100) according to any one of claims 1 to 3, in which a control device (31) is provided, with which the energy storage system (17) is controllable for storing and discharging electrical energy.

5. Plant network (100) according to any one of the preceding claims, in which the electrolysis plant (1, 1A, 1B) is connected via a connection line (9, 9A, 9B) to the central supply line (5), wherein in the connection line (9, 9A, 9B) a DC-DC converter (11, 11A, 11B) is installed, whose input voltage corresponds to the high voltage in the central supply line (5) and whose output voltage to an operating voltage of the electrolysis plant (1, 1A, 1B).

6. Plant network (100) according to claim 5, in which the DC-DC converter (11, 11A, 11B) is designed as an adjustable step-down converter, so that the supply of the electrolysis plant (1, 1A, 1B) with electrolysis current received from a fluctuating feed-in power of the power supply source (3) in the central supply line (5) is adaptable and adjustable.

7. Plant network (100) according to claim 6, in which the DC-DC converter (11, 11A, 11B) is designed as a controllable step-down converter equipped with a regulation of the output voltage via the method of pulse width modulation in non-gap operation.

8. Plant network (100) according to claim 5, in which the DC-DC converter (11) is formed by an intermediate transformer (37) to which an inverter (33) is connected on the primary side and a rectifier (35) on the secondary side, so that a direct current is suppliable to the electrolysis plant (1, 1A, 1B) at a given operating voltage, wherein an AC intermediate circuit is formed.

9. Plant network (100) according to claim 8, in which the rectifier (35) is adjustable and / or designed as a three-phase rectifier, particularly as a B6 bridge rectifier.

10. Plant network (100) according to claim 8 or 9, in which in the DC converter (11) the alternating current frequency of the AC intermediate circuit is adjustable to a predetermined value.

11. Plant network (100) according to any one of claims 8 to 10, in which the DC-DC converter (11) is designed for an alternating current frequency in the AC intermediate circuit that is higher than the usual main frequencies of 50 - 60 Hz of a public electricity grid (25).

12. Plant network (100) according to any one of the preceding claims, in which the wind turbine (19) comprises a generator (39) whose output is connected to the AC voltage input (41) of the rectifier (13A).

13. Plant network (100) according to claim 12, with a generator (39), which is designed as a three-phase synchronous machine with permanent magnet excitation.

14. Method for operating a plant network (100) according to one of the preceding claims, in which in a charging phase electrical energy from the central supply line (5) is stored in the energy storage system (17), and in a discharge phase electrical energy is discharged and fed into the central supply line (5).

15. The method according to claim 14, in which the plant network (100) is operated in an off-grid island operation.
